# EUROPEAN PATENT APPLICATION

(11) **EP 4 734 202 A1**
(43) Date of publication of application: **29.04.2026**
(21) Application number: 25211181.0
(22) Date of filing: 24.10.2025
(51) Int. Cl.: H01M 10/04, H01M 50/147, H01M 50/167, H01M 50/184, H01M 50/186

(54) **SECONDARY BATTERY, SECONDARY BATTERY MANUFACTURING APPARATUS AND METHOD**

(30) Priority: 25.10.2024 KR 20240147805
(71) Applicant: SK On Co., Ltd., Seoul 03161 (KR)
(72) Inventor: MUN, Hak Bong, 34124 Daejeon (KR); BYUN, Jae Gyu, 34124 Daejeon (KR); JUNG, Moon Hyung, 34124 Daejeon (KR); CHOI, Seung Won, 34124 Daejeon (KR)
(74) Representative: Stolmár & Partner Patentanwälte PartG mbB

(57) **Abstract**

A secondary battery according to various embodiments of the present disclosure includes: a battery can configured to accommodate an electrode assembly; a cap plate including a body part having a shape corresponding to an opening of the battery can and an edge part protruding upward along a perimeter of the body part, the cap plate being coupled to the opening; and a sealing gasket disposed between the battery can and the edge part, wherein the battery can may include a crimping part formed by bending at least a partial section of an upper end portion thereof to surround the edge part.

## Description

### [BACKGROUND OF THE INVENTION]

### 1. Field of the Invention

The present disclosure relates to a secondary battery, as well as an apparatus and a method for manufacturing the secondary battery.

### 2. Description of the Related Art

Secondary batteries are used as energy sources in electric vehicles or electronic devices. In the secondary battery, a jelly-roll-type electrode assembly, in which an anode plate, a cathode plate and a separator are wound together, is used, or alternatively, an electrode assembly fabricated by stacking an anode plate, a cathode plate, and a separator in an appropriate order may be used.

This electrode assembly is accommodated in a housing and connected to an anode terminal and a cathode terminal. The housing is then sealed after being filled with an electrolyte.

### [SUMMARY OF THE INVENTION]

An object of the present disclosure is to provide a secondary battery capable of achieving hermeticity by forming a crimping part while omitting a beading part, as well as an apparatus and a method for manufacturing the secondary battery.

A secondary battery according to various embodiments of the present disclosure may include: a battery can configured to accommodate an electrode assembly; a cap plate comprising a body part having a shape corresponding to an opening of the battery can and an edge part protruding upward along a perimeter of the body part, the cap plate being coupled to the opening; and a sealing gasket disposed between the battery can and the edge part, wherein the battery can may include a crimping part formed by bending at least a partial section of an upper end portion thereof to surround the edge part.

In exemplary embodiments, the crimping part may include an open end part that surrounds a radially inner side of the edge part and a bent part that surrounds an upper side of the edge part, wherein the open end part may be disposed parallel to the edge part.

In exemplary embodiments, the open end part and the body part may be spaced apart from each other to define an insulation gap.

In exemplary embodiments, the sealing gasket may include: an inner part in close contact with a radially inner surface of the edge part; an outer part in close contact with a radially outer surface of the edge part; and a connecting part that connects the inner part and the outer part and is in close contact with an upper surface of the edge part.

In exemplary embodiments, the sealing gasket may include an extension part extending from the inner part and disposed to cover at least a partial section of the insulation gap formed between the open end part and the body part.

In exemplary embodiments, the open end part may include a tapered section formed with a tapered edge on one side, wherein the extension part may be disposed to cover a region of the open end part excluding the tapered section.

In exemplary embodiments, the cap plate may include a mold placement space formed on a radially inner side of the edge part.

In exemplary embodiments, the cap plate may include a terminal part protruding axially from one side of the body part, wherein the mold placement space may be formed between the edge part and the terminal part.

In exemplary embodiments, the cap plate may be configured such that the body part is seated on an upper end of the electrode assembly.

In exemplary embodiments, the body part may be directly electrically connected to an uncoated part of the electrode assembly.

In exemplary embodiments, the battery can may include a side wall and a lower wall defining a space to accommodate the electrode assembly, wherein the side wall may include a vertical part connecting the lower wall and the crimping part, and wherein an entire section of the vertical part may be formed parallel to the axial direction of the battery can.

An apparatus for manufacturing a secondary battery according to various embodiments of the present disclosure, configured to form a crimping part by bending a side wall of a battery can, may include: a first mold configured to apply a primary pressing force in an axially downward direction to an open end part of the side wall; and a second mold configured to apply a secondary pressing force in a radially outward direction to the open end part after it is bent by the first mold.

In exemplary embodiments, the first mold may include a first main body configured to rotate, and a molding surface formed concavely upward from a lower surface of the first main body, wherein the molding surface may include a direction-changing part configured to guide the open end part to slide and bend downward.

In exemplary embodiments, a radial length of the direction-changing part may be the same as a radial width of the crimping part.

In exemplary embodiments, a cap plate may be coupled to an opening formed by opening at least one end of the battery can, and the cap plate may include a body part having a shape corresponding to the open part and an edge part protruding upward along a perimeter of the body part, wherein the second mold may be configured to press the open end part toward the edge part.

In exemplary embodiments, the second mold may press the open end part such that at least a portion of the open end part is disposed parallel to the edge part.

In exemplary embodiments, the open end part may be bent so as to be spaced apart from the body part by a predetermined distance.

In exemplary embodiments, the cap plate may include a terminal part protruding upward in an axial direction from one side of the body part, and wherein the second mold may be placed in a mold placement space formed between the edge part and the terminal part to press the open end part.

A method for manufacturing a secondary battery according to various embodiments of the present disclosure may include: an initial placement step of sequentially placing a sealing gasket and a cap plate on an inner surface of a side wall of a battery can; a primary crimping step of applying a primary pressing force in an axially downward direction to an open end part of the side wall using a first mold; and a secondary crimping step of applying a secondary pressing force in a radially outward direction to the open end part, which has been bent in a direction toward an electrode assembly placed inside the battery can through the primary crimping step.

In exemplary embodiments, wherein the cap plate may include a body part having a shape corresponding to the opening of the battery can and an edge part protruding upward along a perimeter of the body part, wherein, in the secondary crimping step, the open end part may be pressed to surround the edge part with the sealing gasket interposed therebetween.

According to various embodiments of the present disclosure, by not applying a downward pressing force to the cap plate during the crimping process, the beading part for supporting the cap plate may be omitted.

That is, in the present disclosure, the first mold may apply a downward pressing force to the side wall of the battery can, rather than the cap plate. In addition, the second mold may apply a pressing force in a radially outward direction, rather than a downward pressing force, to the open end part of the side wall, thereby forming a crimping part.

Therefore, since the sealing structure proposed in the present disclosure does not require a beading part, space utilization and energy density inside the battery can may be increased.

Accordingly, in the present disclosure, by not applying a downward pressing force to the cap plate seated on the upper end of the electrode assembly during the crimping process, damage to the electrode assembly may be prevented.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a cross-sectional view schematically illustrating a secondary battery according to an exemplary embodiment of the present disclosure;
FIGS. 2 and 3 are enlarged cross-sectional views of part A in FIG. 1 in an exemplary embodiment of the present disclosure;
FIG. 4 is an exploded perspective view illustrating a secondary battery according to an exemplary embodiment of the present disclosure;
FIG. 5 is a view schematically illustrating a preparation step of the crimping process using an apparatus for manufacturing a secondary battery apparatus according to an exemplary embodiment of the present disclosure;
FIGS. 6 and 7 are views schematically illustrating the crimping process using a first mold according to an exemplary embodiment of the present disclosure;
FIGS. 8 and 9 are views schematically illustrating the crimping process using a second mold according to an exemplary embodiment of the present disclosure; and
FIG. 10 is a flowchart illustrating the procedure of a method for manufacturing a secondary battery apparatus according to an exemplary embodiment of the present disclosure.

### [DETAILED DESCRIPTION OF THE INVENTION]

The embodiments of the present disclosure are provided to more fully describe the present disclosure to those skilled in the art to which the present invention pertains. The following embodiments may be modified in various forms, and the scope of the present disclosure is not limited to these embodiments.

Hereinafter, some embodiments of the present disclosure will be described through exemplary drawings for the convenience of description. When assigning reference numerals to components of respective drawings, it should be noted that the same components will be denoted by the same reference numerals, even if they appear in different drawings.

The terms or words used in this specification and the claims should not be construed as being limited to their conventional or lexical meanings, and instead, in accordance with the principle that an inventor may define the concepts of terms or words in the most appropriate manner to describe his or her invention, they should be interpreted based on the meanings and concepts that meet the technical ideas of the present disclosure.

The terms used herein are provided to describe specific embodiments and are not intended to limit the present disclosure. As used herein, the singular form may include the plural form unless the context clearly dictates otherwise.

In addition, when used to describe and define the present disclosure, terms such as "comprise," "include," "consist of," and "have" should be interpreted in a non-exclusive manner. Unless explicitly stated otherwise, these terms should be construed to imply that the presence of the corresponding component, and thus should not be interpreted to exclude the presence of other components but rather to include them.

In addition, in describing components of the embodiment of the present disclosure, the terms such as first, second, A, B, (a), (b), and the like may be used. These terms are used to distinguish the component from other components and do not impose any limitations on their nature, sequence or order, etc.

It will be understood that when a component is described as being "connected" or "coupled" to another component, the component may be directly connected or coupled to the other component, but it may be "connected" or "coupled" to the other component with another component possibly interposed.

Space-related terms such as "beneath," "below," "lower," "above," and "upper" may be used to facilitate understanding of the relationship between an element or feature and another element or feature illustrated in the drawings. These space-related terms are provided to facilitate understanding of the present disclosure in their various process or usage states and are not intended to impose any limitations on the present disclosure. For example, if an element or feature in the drawing is turned upside down, the element or feature described as "beneath" or "below" becomes "above" or "upper." Accordingly, the term "beneath" is a relative concept that may encompass "upper" or "below" depending on orientation.

The embodiments described in this specification and the configurations illustrated in the drawings merely represent the most preferred embodiments of the present disclosure but do not encompass all technical ideas of the present disclosure. Thus, it should be understood that various modifications and equivalents may be implemented at the time of filing the present application. In addition, the publicly known functions and configurations that are deemed unnecessary for clarifying the essence of the present invention will not be described.

Hereinafter, a secondary battery 100 according to various embodiments of the present disclosure will be described in detail with reference to the accompanying drawings.

The secondary battery 100 described in the present disclosure may be any type of conventional battery cell capable of converting the chemical energy of materials stored in the battery into electrical energy, and capable of supporting multiple charge/discharge cycles.

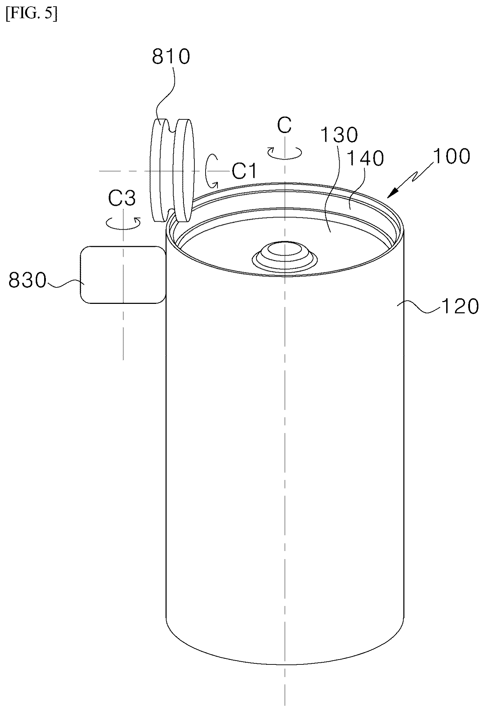

In describing various embodiments of the present disclosure, the axial direction may refer to the direction in which a central axis (e.g., C in FIG. 5) of a battery can 120 extends, and the radial direction may refer to the direction extending toward or away from the above-described central axis. Additionally, since a jelly-roll-shaped electrode assembly 110 is disposed coaxially with respect to the battery can 120, the axial direction may also refer to a direction parallel to the central axis along which the electrode assembly 110 is wound.

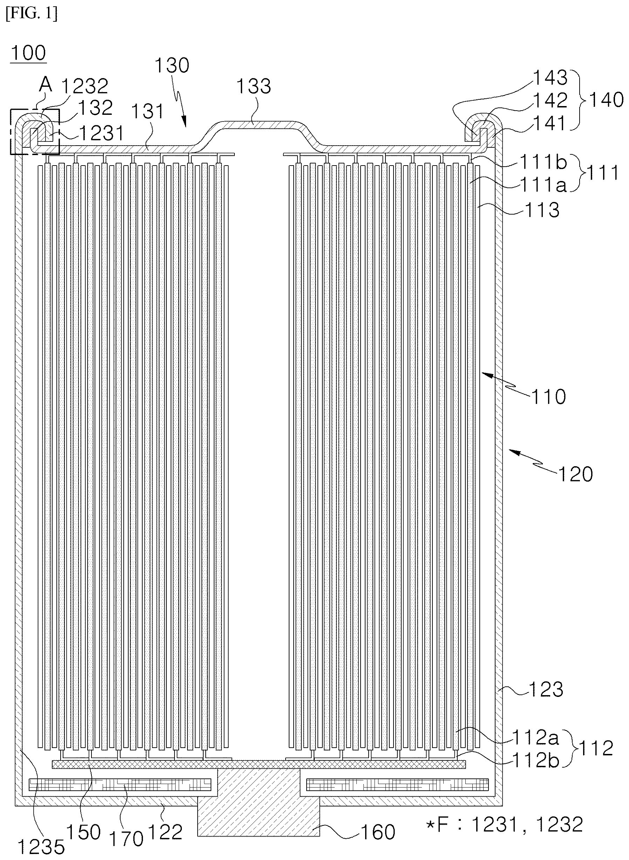

FIG. 1 is a cross-sectional view schematically illustrating the secondary battery 100 according to an exemplary embodiment of the present disclosure.

Referring to FIG. 1, the secondary battery 100 according to an exemplary embodiment of the present disclosure may include the electrode assembly 110, the battery can 120, a cap plate 130, and a sealing gasket 140.

In addition, the secondary battery may further include a lower current collector plate 150, an electrode terminal 160, and an insulator 170.

First, the electrode assembly 110 may include a first electrode 111, a second electrode 112, and a separator 113. The first electrode 111 and the second electrode 112 may include a current collector and a coating layer formed by applying an active material to the current collector, respectively.

The first electrode 111 may be either a cathode or an anode. For example, the first electrode 111 may be an anode. In an exemplary embodiment, the first electrode 111 may include an anode current collector in the form of a metal foil and an anode coating layer 111a formed by applying an anode active material to the anode current collector. For example, the anode current collector may include copper or nickel.

In an exemplary embodiment, the anode coating layer 111a may be an electrically conductive coating, and may include an anode active material. For example, the anode active material may include a silicon material (e.g., metallic silicon and silicon dioxide), a carbon-based material (e.g., graphite materials, graphene-containing materials, hard carbon, soft carbon, carbon nanotubes, porous carbon, or conductive carbon), a tin-based material, or a metal oxide, but it is not limited thereto, and any anode active material known to those skilled in the art may be used.

The anode current collector may include an anode uncoated part 111b, on which no anode coating layer 111a is formed. The anode uncoated part 111b may serve as an anode tab.

The anode uncoated part 111b may be exposed to one axial side of the electrode assembly 110. For example, the anode uncoated part 111b may protrude from the electrode assembly 110 toward the cap plate 130.

The anode uncoated part 111b may be electrically connected to the cap plate 130 described below. For example, the anode uncoated part 111b may be directly coupled to the cap plate 130 by a method such as laser welding. In the present disclosure, the beading part may be omitted from the battery can 120, and furthermore, by directly connecting the anode uncoated part 111b to the cap plate 130, the internal volume of the battery can 120 may be increased, thereby further increasing the energy density. However, it is not limited thereto, and the anode uncoated part 111b may be connected to the cap plate 130 via a separate current collector plate.

The second electrode 112 may be either a cathode or an anode. When the first electrode 111 is an anode, the second electrode 112 may be a cathode, and when the first electrode 111 is a cathode, the second electrode 112 may be an anode.

For example, the second electrode 112 may be a cathode. The second electrode 112 may include a cathode current collector in the form of a metal foil and a cathode coating layer 112a formed by applying a cathode active material to the cathode current collector. For example, the cathode current collector may include aluminum.

The cathode coating layer 112a may be an electrically conductive coating, and may include a cathode active material. For example, the cathode active material may include lithium nickel manganese cobalt oxide (NMC), lithium manganese oxide (LMO), lithium iron phosphate (LFP), lithium cobalt oxide (LCO), lithium titanate (LTO), or a chalcogenide compound (such as LiTiS₂), but it is not limited thereto, and any cathode active material known to those skilled in the art may be used.

The cathode current collector may include a cathode uncoated part 112b, on which no cathode coating layer 112a is formed. For example, the cathode uncoated part 112b may serve as a cathode tab.

The cathode uncoated part 112b may be exposed from one axial side of the electrode assembly 110. For example, the cathode uncoated part 112b may protrude from the electrode assembly 110 in a direction opposite to the cap plate 130.

The cathode uncoated part 112b may be electrically connected to the electrode terminal 160 described below. For example, the cathode uncoated part 112b may be connected to the electrode terminal 160 through the current collector plate. However, it is not limited thereto, and the cathode uncoated part 112b may also be directly coupled to the electrode terminal 160 by a method such as welding.

The separator 113 may be interposed between the first electrode 111 and the second electrode 112 to prevent the first electrode 111 and the second electrode 112 from being electrically connected to each other and causing a short circuit. For example, the separator 113 may include an electrically insulating material. For example, the separator 113 may include a polymeric material. For example, the separator 113 may include polyethylene, polypropylene, or a combination thereof, but it is not limited thereto.

In the present disclosure, a tabless structure may be used in which the uncoated parts of the first electrode 111 and the second electrode 112 serve as electrode tabs without the need for separate electrode tabs, but it is not limited thereto, and it is obvious that a structure in which separate electrode tabs are connected to the first electrode 111 and the second electrode 112 may also be employed.

The battery can 120 may have an opening 121 formed at least one axial end thereof so that the electrode assembly 110 can be accommodated through the opening of the battery can 120. Here, the upper end region of a side wall 123 forming the opening 121 may be described as an open end part 1231.

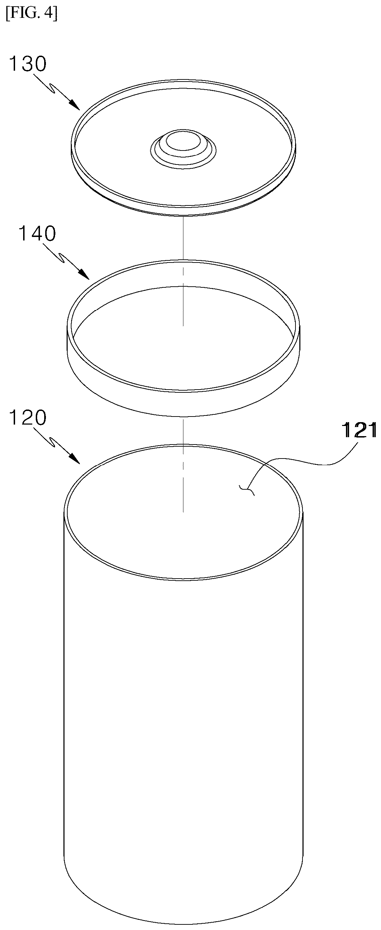

The battery can 120 have an internal space formed therein to accommodate the electrode assembly 110. Here, as an example, an upper end of the battery can 120 is described as being open as shown in FIG. 4, but it is obvious that the opposite configuration may also be employed.

The battery can 120 may include a conductive metal material. The battery can 120 may be electrically connected to either the first electrode 111 or the second electrode 112. For example, the battery can 120 may be electrically connected to the second electrode 112 and may have the same polarity as the second electrode 112. However, it is not limited thereto, and the battery can 120 may be configured to be electrically insulated from the first electrode 111 or the second electrode 112.

The shape of the battery can 120 may be determined to correspond to the specific shape of the electrode assembly 110. For example, the battery can 120 may be cylindrical or have a rectangular parallelepiped structure.

The battery can 120 may include the opening 121 formed at an upper axial end, a lower wall 122 formed at an axial end opposite to the opening 121, and the side wall 123 connecting the opening 121 and the lower wall 122.

The side wall 123 may include an open end part 1231 formed at an upper end region, a vertical part 1235 connected to the lower wall 122, and a bent part 1232 that connects the vertical part 1235 and the open end part 1231 and that is bent and deformed during a crimping process. Here, the bent part 1232 and the open end part 1231 that are deformed through the crimping process may be described as a crimping part F.

In the present disclosure, since a beading part is not formed below the crimping part F, the entire section of the vertical part 1235 may be formed to be parallel to the axial direction of the battery can 120.

The electrode terminal 160 may be disposed on the lower wall 122 of the battery can 120.

The structure of the secondary battery 100 on a lower side of the electrode assembly 110 will be described first.

The electrode terminal 160 may be disposed on the lower wall 122 of the battery can 120. For example, the electrode terminal 160 may be disposed by passing through a terminal hole formed in the lower wall 122 of the battery can 120.

For example, the electrode terminal 160 may be integrally formed with the lower wall 122 of the battery can 120. Alternatively, the electrode terminal 160 may be welded while passing through the lower wall 122 of the battery can 120 and coupled to the lower wall 122 of the battery can 120. However, it is not limited thereto, and the electrode terminal 160 may also be configured to pass through the lower wall 122 of the battery can 120, while being electrically insulated from the battery can 120 through a terminal gasket (not shown).

The electrode terminal 160 may be electrically connected to the lower current collector plate 150. The electrode terminal 160 may be electrically connected to the lower current collector plate 150 to serve as the electrode terminal 160 of the secondary battery 100 of the present disclosure. For example, the electrode terminal 160 may be a cathode terminal.

The electrode terminal 160 may be electrically connected to the first electrode 111 or the second electrode 112 of the electrode assembly 110. For example, the electrode terminal 160 may be directly connected to the second electrode 112, or may be connected to the second electrode 112 through the lower current collector plate 150.

For example, the electrode terminal 160 may be configured to be electrically connected to or insulated from the battery can 120 as needed. For example, the electrode terminal 160 may be disposed and directly coupled to the lower wall 122 to establish electrical connection. Alternatively, the electrode terminal 160 may be disposed to be electrically insulated from the lower wall 122 of the battery can 120. The electrode terminal 160 and the battery can 120 may have different polarities.

For example, an upper end portion of the electrode terminal 160 may be connected to the lower current collector plate 150 through a hollow portion of the insulator 170, and a lower end portion of the electrode terminal 160 may be exposed to the outside of the battery can 120 and fixed.

FIG. 1 illustrates an exemplary form of the electrode terminal 160, and the specific form of the electrode terminal 160 is not limited thereto, and it is obvious that any known electrode terminal 160 form may be employed.

The lower current collector plate 150 may be disposed adjacent to a lower end portion of the electrode assembly 110 inside the battery can 120. The lower current collector plate 150 may be electrically connected to the second electrode 112 to provide a pathway for electron migration. For example, the lower current collector plate 150 may be disposed to be electrically connected to the uncoated part of the second electrode 112. The lower current collector plate 150 may be connected by directly contacting the uncoated part of the second electrode 112 (e.g., the cathode uncoated part 112b), but is not limited thereto, and may be connected via a separate conductive member. For example, the lower current collector plate 150 may be a cathode current collector plate.

The lower current collector plate 150 may be electrically connected to the electrode terminal 160. The lower current collector plate 150 may be electrically connected to the upper end portion of the electrode terminal 160 and the second electrode 112 of the electrode assembly 110 to provide a pathway for electron migration.

For example, the lower current collector plate 150 may be in direct contact with the upper end portion of the electrode terminal 160 and the uncoated part 112b of the second electrode 112. For example, the lower current collector plate 150 may be electrically connected to the upper end portion of the electrode terminal 160 and the uncoated part 112b of the second electrode 112 through a conductive member, respectively.

The lower current collector plate 150 may be provided in a shape corresponding to a lower surface of the electrode assembly 110. For example, the lower current collector plate 150 may be a circular metal plate.

The lower current collector plate 150 may be disposed to be electrically insulated from the battery can 120, and the lower current collector plate 150 and the battery can 120 may have different polarities. The lower current collector plate 150 may be electrically insulated from the battery can 120 by the insulator 170.

The insulator 170 may be disposed to electrically insulate the battery can 120. The secondary battery 100 may electrically insulate the lower current collector plate 150 from the battery can 120 by interposing the insulator 170 between the lower current collector plate 150 and the battery can 120.

The insulator 170 may be disposed between the lower current collector plate 150 and the lower wall 122 of the battery can 120, thereby preventing the lower current collector plate 150 from contacting the lower wall 122 or the side wall 123 of the battery can 120.

Alternatively, if the lower current collector plate 150 is omitted and the electrode terminal 160 is directly connected to the uncoated part 112b of the second electrode 112, the insulator 170 may be disposed between the uncoated part 112b of the second electrode 112 of the electrode assembly 110 and the lower wall 122 of the battery can 120.

For example, the insulator 170 may have a hollow circular plate shape. The electrode terminal 160 may be electrically connected to the lower current collector plate 150 by passing through the the insulator 170 via the hollow portion thereof.

In an exemplary embodiment, the insulator 170 may be omitted depending on the configuration of the electrode terminal 160. For example, if the electrode terminal 160 is configured to be electrically connected to the battery can 120, the insulator 170 may be omitted.

Next, the structure of the secondary battery 100 on an upper side of the electrode assembly 110 will be described in detail.

In the secondary battery 100 of the present disclosure, the electrolyte may be injected into the battery can 120 together with the electrode assembly 110 through the opening 121 during the manufacturing process. In this case, the electrolyte serves as a medium for lithium ion migration between the second electrode 112 and the first electrode 111 forming the electrode assembly 110. For example, the electrolyte may be a non-aqueous organic electrolyte that is a mixture of a lithium salt and a high-purity organic solvent. For example, the electrolyte may be a polymer or solid electrolyte using a polymer electrolyte.

After the electrode assembly 110 and the electrolyte are inserted into the battery can 120, the opening 121 of the battery can 120 may be sealed by the cap plate 130.

Conventionally, the battery can 120 may include a beading part formed by recessing a partial section of the side wall 123 of the battery can 120 inward toward the center after the electrode assembly 110 is received therein.

In the structure of the conventional secondary battery 100, the beading part was used to apply a physical fixing force to the electrode assembly 110 accommodated inside the battery can 120, while serving as a means to seat the cap plate 130.

In addition, conventionally, a method of mechanically sealing the battery can 120 was used by forming a crimping part F. This was done by bending the open end part 1231 of the battery can 120 inward while the cap plate 130 was seated on the beading part, so that the open end part 1231 and the cap plate 130 came into close contact with each other. In this case, during applying a downward pressing force to bend the open end part 1231 of the battery can 120 using a crimping mold, a downward pressing force is simultaneously applied to both the open end part 1231 of the battery can 120 and the cap plate 130.

Therefore, the conventional beading part was also used as a means of supporting the downward pressing force applied by a crimping mold during the crimping process.

However, since the beading part is formed by inwardly recessing the side wall 123 of the battery can 120, the internal space efficiency of the battery can 120 is reduced by the portion of the side wall 123 that is recessed. In other words, in the conventional secondary battery 100, it was difficult to efficiently utilize the internal space of the battery can 120 due to the beading part, which made it difficult to increase the energy density of the secondary battery 100.

Therefore, the present disclosure proposes the secondary battery 100, an apparatus for manufacturing a secondary battery apparatus ("secondary battery manufacturing apparatus") 800, and a secondary battery manufacturing method that may form a crimping part F in the battery can 120 while omitting the beading part.

Referring to FIG. 1 again, in various embodiments of the present disclosure, the structure of the secondary battery 100 that can achieve a sealing force through a crimping process without forming a beading part in the battery can 120 will be described in detail.

First, while the electrode assembly 110 and an electrolyte are inserted into the battery can 120, the cap plate 130 may be coupled to the opening 121 of the battery can 120.

The cap plate 130 may be coupled to the opening 121 of the battery can 120 and may serve to seal the opening 121 of the battery can 120. The cap plate 130 may be made of a conductive metal.

The cap plate 130 may be electrically connected to the first electrode 111. The cap plate 130 may have the same polarity as the first electrode 111, and for example, the cap plate 130 may serve as an anode terminal. The cap plate 130 may be disposed to be electrically insulated from the battery can 120.

The cap plate 130 may be formed in a shape corresponding to the opening 121 of the battery can 120. For example, the cap plate 130 may have a generally circular plate shape.

In detail, the cap plate 130 may include a body part 131 formed in a shape corresponding to the opening 121 of the battery can 120, and an edge part 132 protruding upwardly along a peripheral edge of the body part 131. In addition, the cap plate 130 may include a terminal part 133 that protrudes upward in the axial direction from one side of the body part 131.

The body part 131 may be configured to have a shape corresponding to the opening 121 of the battery can 120. The body part 131 may be seated on an upper end of the electrode assembly 110. In the present disclosure, the body part 131 may be seated directly on the upper end of the electrode assembly 110 rather than on a beading part of the battery can 120.

In an exemplary embodiment, the body part 131 may be electrically connected to the first electrode 111. The body part 131 may be electrically connected to the uncoated part of the first electrode 111. The body part 131 may be directly electrically connected to the uncoated part of the first electrode 111. For example, the body part 131 may be directly coupled to and in contact with the uncoated part of the first electrode 111.

As the body part 131 of the cap plate 130 is directly coupled to the uncoated part of the first electrode 111, a separate conductive member or a current collector plate may be omitted, thereby improving the efficiency of the internal space of the battery can 120. However, it is not limited thereto, and the body part 131 may be coupled to the uncoated part of the first electrode 111 via a separate conductive member.

The terminal part 133 may be disposed to protrude upward from one side of the body part 131. The terminal part 133 is formed to protrude from the body part 131 and may serve as the electrode terminal 160 for electrical connection to an external device.

For example, the terminal part 133 may be disposed to protrude upward from a radial central portion of the body part 131. For example, at least one terminal part 133 may be disposed on the body part 131. However, it is not limited thereto, and the terminal part 133 may be omitted from the body part 131, and the body part 131 itself may serve as the electrode terminal 160.

In an exemplary embodiment, when the terminal part 133 is formed on the body part 131, the terminal part 133 may be positioned so as to be spaced apart from the edge part 132 formed along the edge of the body part 131 in a radial direction by a predetermined distance. For example, a mold placement space 135 may be formed between the terminal part 133 and the edge part 132.

In the present disclosure, since the second mold 820 of the secondary battery manufacturing apparatus 800 described below applies a pressing force in the radially outward direction to the side wall 123 (more specifically, the open end part 1231 of the side wall 123), a space may be provided between the terminal part 133 and the edge part 132 to form the mold placement space 135 for placing the second mold 820.

The edge part 132 of the cap plate 130 may be formed to protrude upward along the peripheral edge of the body part 131. The edge part 132 may be electrically insulated from the side wall 123 by means of the sealing gasket 140, which is disposed between the edge part 132 and the side wall 123 of the battery can 120.

The edge part 132 may be configured to be surrounded by the sealing gasket 140. The edge part 132 may be surrounded, together with the sealing gasket 140, by the crimping part F of the side wall 123.

In the present disclosure, a mechanical sealing structure may be formed as the edge part 132 of the cap plate 130 is surrounded by the crimping part F formed at the open end part 1231 of the side wall 123.

In an exemplary embodiment of the present disclosure, the sealing gasket 140 may be disposed between the edge part 132 of the cap plate 130 and the side wall 123 of the battery can 120 to further improve the sealing performance of the battery can 120. The sealing gasket 140 may be interposed between the cap plate 130 and the crimping part F of the side wall 123 to maintain airtightness.

In an exemplary embodiment, the sealing gasket 140 may have a ring shape. The sealing gasket 140 formed in a ring shape may have a predetermined thickness in the radial direction and an extended length in the axial direction. The sealing gasket 140 may be formed of an elastic material.

The sealing gasket 140 may be bent together with the open end part 1231 of the side wall 123 during the crimping process described below, thereby being formed to surround the edge part 132 of the cap plate 130.

For example, the sealing gasket 140 may include an outer part 141 configured to surround a radially outer surface of the edge part 132, an inner part 143 configured to surround a radially inner surface of the edge part 132, and a connecting part 142 that connects the outer part 141 and the inner part 143 and is configured to surround an upper surface of the edge part 132.

For example, the outer part 141, the connecting part 142, and the inner part 143 of the sealing gasket 140 may be formed in an "inverted-U" shape as a whole.

The outer part 141 of the sealing gasket 140 may be interposed between the side wall 123 of the battery can 120 and the outer surface of the edge part 132 to prevent the outer surface of the edge part 132 from directly contacting the side wall 123 of the battery can 120. For example, the outer part 141 may be disposed parallel to the side wall 123 of the battery can 120 and the edge part 132 of the cap plate 130 when viewed in a vertical cross-section. The outer part 141 of the sealing gasket 140 may be disposed parallel to the inner part 143.

The inner part 143 of the sealing gasket 140 may be interposed between the open end part 1231 of the side wall 123 forming the crimping part F and the inner surface of the edge part 132 to prevent the inner surface of the edge part 132 from directly contacting the open end part 1231 of the side wall 123. The inner part 143 may be disposed parallel to the edge part 132 of the cap plate 130 when viewed in a vertical cross-section.

The inner part 143 may be pressed radially outward by the second mold 820 during the crimping process. The inner part 143 may be pressed by the open end part 1231 of the side wall 123, which has been pressed radially outward by the second mold 820, thereby being elastically deformed and tightly sealed to the edge part 132.

The inner part 143 may be disposed parallel to the outer part 141, and the edge part 132 may be tightly engaged between the inner part 143 and the outer part 141, thereby improving the sealing performance of the battery can 120.

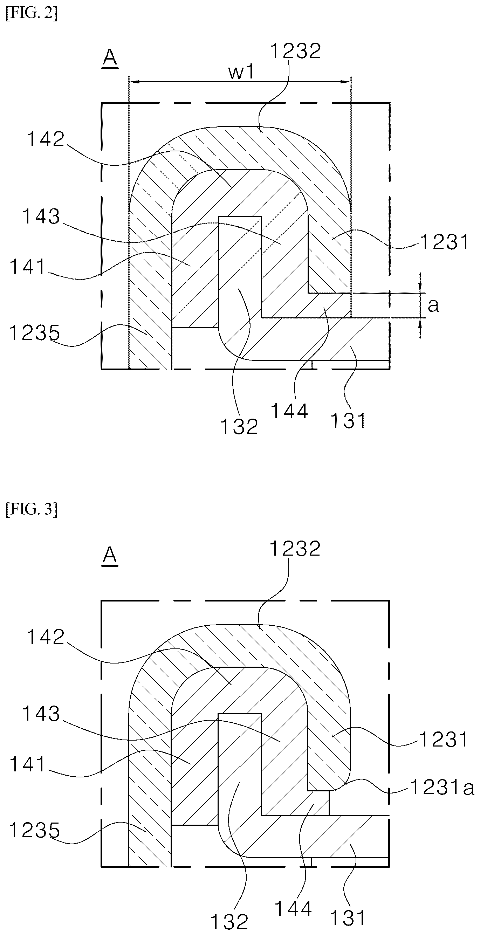

For example, the lower end of the inner part 143 may be in contact with the body part 131 of the cap plate 130. For example, the lower end of the inner part 143 may form an extension part (e.g., 144 in FIG. 2) which extends inward in the radial direction from the upper surface of the body part 131 by a predetermined length. The extension part 144 may be disposed between the lower end of the open end part 1231 of the side wall 123 and the body part 131, thereby preventing direct contact between the open end part 1231 and the body part 131.

The connecting part 142 of the sealing gasket 140 connects the outer part 141 and the inner part 143, and may be disposed between the bent part 1232 of the side wall 123 and the edge part 132. The connecting part 142 may be formed by bending together with the bent part 1232 of the side wall 123 during the crimping process. The connecting part 142 may achieve a sealing force by contacting the edge part 132 and the bent part 1232, respectively. For example, the connecting part 142 may not transmit a downward pressing force to the edge part 132 during the crimping process. For example, the connecting part 142 may be elastically deformed between the edge part 132 and the bent part 1232, thereby minimizing the downward pressing force exerted on the edge part 132.

Meanwhile, an upper section of the side wall 123 forming the opening 121 of the battery can 120 may be pressed and bent by the secondary battery manufacturing apparatus 800 of the present disclosure, at least in a partial section, to form the crimping part F.

The crimping part F may be formed by bending a partial section of the side wall 123 including the open end part 1231 so as to surround the edge part 132 together with the sealing gasket 140. Here, the crimping part F may be described as including the open end part 1231, which is the upper end portion of the side wall 123, and the bent part 1232, which is connected to the open end part 1231 and bent by deformation caused by a first mold 810. A specific process for forming the crimping part F in the present disclosure will be described below.

In the present disclosure, the crimping part F may achieve sealing performance by bending to surround the edge part 132 of the cap plate 130. The crimping part F does not apply a pressing force to the body part 131 of the cap plate 130 and may not be directly coupled thereto. Accordingly, in the present disclosure, the crimping part F may avoid applying a downward pressing force to the body part 131 of the cap plate 130 that is seated on the upper side of the electrode assembly 110, thereby preventing damage to the electrode assembly 110.

The open end part 1231 of the crimping part F may be bent by the secondary battery manufacturing apparatus 800 during the crimping process and may be disposed parallel to the side wall 123. The open end part 1231 may be disposed on the radially inner side of the edge part 132 so as to be parallel to the edge part 132.

In the present disclosure, the inner part 143 of the sealing gasket 140 may be interposed between the open end part 1231 and the edge part 132, thereby preventing direct contact between the open end part 1231 and the edge part 132. The open end part 1231 may compress the inner part 143 of the sealing gasket 140 radially outward, thereby achieving the sealing force.

The lower end of the open end part 1231 may be disposed at a predetermined distance from the body part 131 of the cap plate 130. In the present disclosure, since the lower end of the open end part 1231 does not directly contact the body part 131, a downward pressing force may not be applied to the body part 131 during the crimping process.

In addition, the lower end of the open end part 1231 may be spaced from the body part 131, thereby preventing a short circuit between them. For example, the above-described extension part 144 of the sealing gasket 140 may be disposed between the lower end of the open end part 1231 and the body part 131, thereby preventing a short circuit between them.

The bent part 1232 of the crimping part F may be formed by pressing a partial section of the side wall 123 by the secondary battery manufacturing apparatus 800 during the crimping process, thereby being bent inward in the radial direction. As a result of the deformation of the bent part 1232, the open end part 1231 may be disposed parallel to the side wall 123.

The bent part 1232 may be disposed to connect the side wall 123 and the open end part 1231. The edge part 132 of the cap plate 130 may be disposed on the lower side of the bent part 1232, and the connecting part 142 of the sealing gasket 140 may be disposed between the bent part 1232 and the edge part 132. For example, the bent part 1232 may contact the connecting part 142, thereby achieving sealing performance. For example, the bent part 1232 may not apply pressure to the connecting part 142 during the crimping process. The bent part 1232 may not apply a downward pressing force to the edge part 132 during the crimping process.

FIGS. 2 and 3 are enlarged cross-sectional views of portion A in FIG. 1 in an exemplary embodiment of the present disclosure.

Referring to FIG. 2, the sealing gasket 140 may include the extension part 144 extending radially inward from the inner part 143 and interposed between the open end part 1231 and the body part 131. The extension part 144 may prevent the open end part 1231 forming the crimping part F from being electrically connected to the body part 131.

For example, the thickness of the extension part 144 of the sealing gasket 140 may be smaller than that of the inner part 143 of the sealing gasket 140. In the present disclosure, by forming the extension part 144 of the sealing gasket 140 thinner than another part (e.g., the inner part 143) of the sealing gasket 140, interference from the extension part 144 may be prevented during the process of pressing the open end part 1231 of the battery can 120 by the first mold 810.

For example, the extension part 144 of the sealing gasket 140 may be disposed to cover the entire upper surface of the open end part 1231. The extension part 144 may be disposed to cover the entire upper surface of the open end part 1231 and may be interposed between the open end part 1231 and the body part 131 of the cap plate 130 after the crimping part F is formed, thereby electrically insulating the open end part 1231 from the cap plate 130.

For example, the extension part 144 of the sealing gasket 140 may be disposed to cover a portion of the radially inner region of the upper surface of the open end part 1231. In this way, during the process in which the open end part 1231 slides along the lower surface of the first mold 810, deformation of the extension part 144 of the sealing gasket 140 due to contact with the first mold 810 may be prevented.

Referring to FIG. 3, the open end part 1231 forming the crimping part F may include a tapered section 1231a, which is formed with a tapered edge on one side. For example, the open end part 1231 may be provided with the tapered section 1231a at a location where the outer surface and the upper surface of the open end part 1231 are connected to form a taper. For instance, a partial section of the outer region of the open end part 1231 of the side wall 123 may be formed with the tapered section 1231a, while the remaining section may be formed as a flat section.

As described below, the portion that slides along a lower surface by the first mold 810 may be a portion where the outer surface and the upper surface of the open end part 1231 are connected, and the tapered section 1231a in that portion may guide smooth sliding movement of the open end part 1231 during pressing by the first mold 810.

For example, the extension part 144 may be disposed to cover the flat section of the upper surface of the open end part 1231 excluding the tapered section 1231a.

The present disclosure proposes a sealing structure for the secondary battery 100 that can achieve hermeticity by forming the crimping part F without forming a beading part in the battery can 120.

Since the sealing structure of the present disclosure does not require a beading part, space utilization and energy density inside the battery can 120 may be increased.

The crimping part F of the present disclosure may either not apply a downward pressing force to the cap plate 130 or may minimize the force during the crimping process. Therefore, the present disclosure may prevent damage to the electrode assembly 110 during the crimping process.

Hereinafter, the secondary battery manufacturing apparatus 800 according to an exemplary embodiment of the present disclosure and a process for manufacturing the secondary battery 100 using the same, will be described in detail with reference to FIGS. 4 to 9.

FIG. 4 is an exploded perspective view illustrating a secondary battery 100 according to an exemplary embodiment of the present disclosure, and FIG. 5 is a view schematically illustrating a preparation step of the crimping process according to an exemplary embodiment of the present disclosure.

Referring to FIGS. 4 and 5, a battery can 120 may have an opening 121 formed at an upper end thereof to allow the insertion of the electrode assembly 110 and the electrolyte. After the electrode assembly 110 and the electrolyte are received inside the battery can 120, a ring-shaped sealing gasket 140 and a cap plate 130 may be sequentially disposed in the battery can 120 through the opening 121.

The sealing gasket 140 may be disposed between an edge part 132 of the cap plate 130 and a side wall 123 of the battery can 120, and they may be fitted together to improve the sealing force. The sealing gasket 140 may be disposed to face at least a portion of an outer surface of the edge part 132.

In the initial arrangement state, an upper surface of the side wall 123, an upper surface of the sealing gasket 140, and the upper surface of the edge part 132 of the cap plate 130 may be positioned at different heights.

For example, the upper surface of the side wall 123 may be positioned at a first height h1 from the lower wall 122, and the upper surface of the sealing gasket 140 may be positioned at a second height h2 lower than the first height h1 from the lower wall 122. This is because, during the crimping process, the open end part 1231 of the side wall 123 is bent to surround the sealing gasket 140 from the outside.

For example, the upper surface of the edge part 132 may be positioned at a third height h3 that is lower than the second height h2 from the lower wall 122. This is because the sealing gasket 140 needs to be bent to surround around the edge part 132 during the crimping process.

That is, in the present disclosure, the upper surface of the edge part 132 may be positioned lower than the upper surface of the side wall 123, and the upper surface of the sealing gasket 140 may be positioned at a height between the upper surface of the edge part 132 and the upper surface of the side wall 123.

For example, when the crimping part F is formed, the upper surface of the side wall 123 may be formed at a height that does not contact the upper surface of the body part 131 of the cap plate 130. At this time, the body part 131 of the cap plate 130 may be seated on the upper surface of the electrode assembly 110.

For example, a lower surface of the sealing gasket 140 may be positioned at a height between the upper surface of the edge part 132 and the upper surface of the body part 131. For example, the lower surface of the sealing gasket 140 may be positioned lower than the body part 131. However, it is not limited thereto, and the height of the lower surface of the sealing gasket 140 may be set to prevent the edge part 132 from contacting the side wall 123.

The crimping process may be performed while the battery can 120 is rotated around a central axis (e.g., C in FIG. 5), with the sealing gasket 140 and the cap plate 130 disposed in the battery can 120 through the opening 121.

First, the first mold 810 of the secondary battery manufacturing apparatus 800 may be positioned adjacent to the open end part 1231 of the side wall 123 of the battery can 120. The first mold 810 may rotate about a first rotational axis (e.g., C1 in FIG. 5), perpendicular to the central axis of the battery can 120, and may be arranged to apply a downward pressing force to the open end part 1231 of the side wall 123.

In addition, in order to prevent the side wall 123 from being deformed radially outward when the side wall 123 is pressed by the first mold 810, a backup roller 830 may be disposed outside the side wall 123. The backup roller 830 may rotate about a third rotational axis (e.g., C3 in FIG. 5), parallel to the central axis of the battery can 120, and may be arranged to support the side wall 123 of the battery can 120 from the outside in the radial direction.

Hereinafter, the secondary battery manufacturing apparatus 800 of the present disclosure and the process for manufacturing the secondary battery 100 using the same will be described in detail.

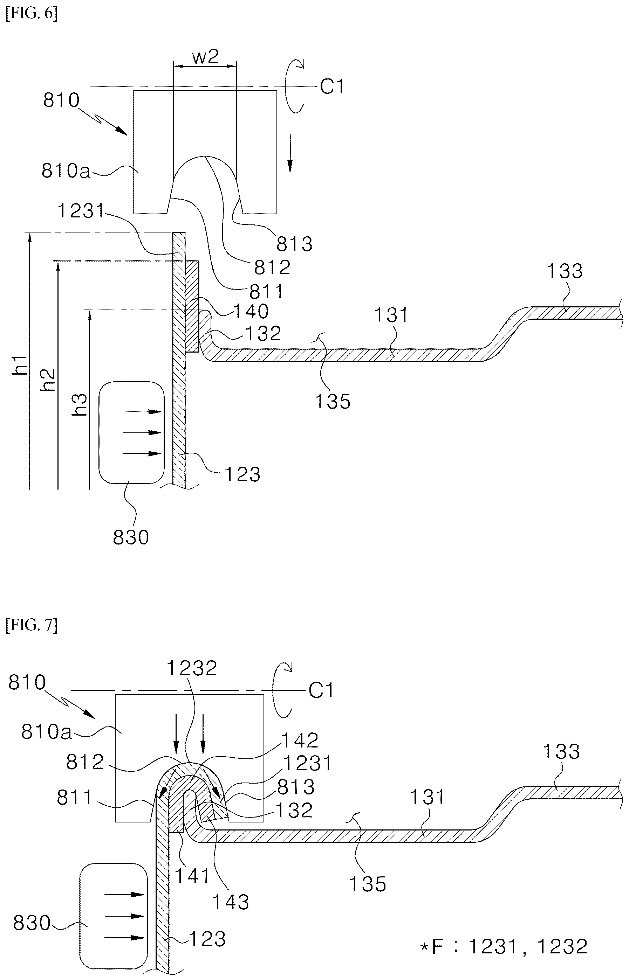

FIGS. 6 and 7 are views schematically illustrating the crimping process using the first mold 810 according to an exemplary embodiment of the present disclosure.

Referring to FIG. 6, in the initial arrangement structure for the crimping process, the edge part 132 may be disposed lower than the open end part 1231 of the side wall 123. The upper surface of the edge part 132 may be disposed lower than the upper surface of the open end part 1231. The upper surface of the open end part 1231 may be disposed at a height that can be bent inwardly to surround at least a partial section of the inner side wall 123 of the edge part 132.

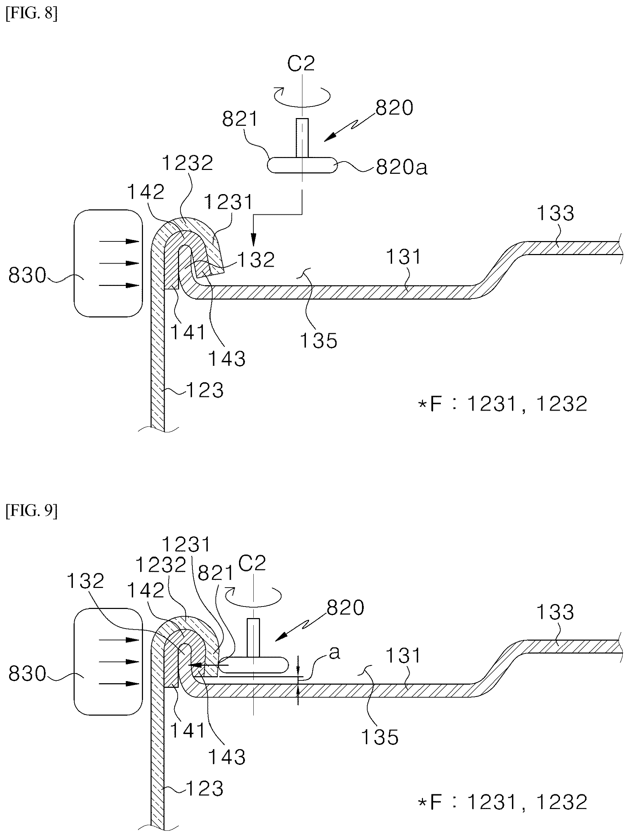

When the upper surface of the open end part 1231 is bent inwardly to form the crimping part F, the upper surface of the open end part 1231 may be disposed at a height that can be spaced apart from the body part 131 of the cap plate 130 by a certain distance. Here, the spacing between the upper surface of the open end part 1231 and the body part 131 of the cap plate 130, which are spaced apart, may be referred to as an insulation gap (e.g., a in FIG. 9).

According to an exemplary embodiment, in the initial arrangement structure for performing the crimping process, the height of the upper surface of the sealing gasket 140 may be disposed lower than that of the upper surface of the open end part 1231 and higher than that of the upper surface of the edge part 132.

For example, in the initial arrangement structure, the sealing gasket 140 may have the above-described extension part 144 formed at the upper end portion thereof. The extension part 144 of the sealing gasket 140 may be disposed to cover at least a partial section of the upper surface of the open end part 1231.

Meanwhile, referring to FIGS. 6 and 7, the secondary battery manufacturing apparatus 800 according to various embodiments of the present disclosure may include the first mold 810 and the backup roller 830.

First, referring to FIG. 6, in a state where the battery can 120, the sealing gasket 140, and the cap plate 130 are initially disposed, the first mold 810 may be arranged to apply a downward pressing force to the open end part 1231 along the perimeter of the battery can 120. In the present disclosure, a primary crimping process may be performed by downward pressing the open end part 1231 of the side wall 123 using the first mold 810. Here, the downward pressing force applied using the first mold 810 may be described as a primary pressing force.

For example, the first mold 810 may include a first main body 810a disposed to rotate about a first rotational axis perpendicular to the central axis of the battery can 120, and a support device of the first mold 810, which enables vertical movement of the first main body 810a in the axial direction.

The first mold 810 may have a molding surface formed concavely upward in a vertical cross-section on a lower surface thereof. For example, the molding surface may include a guide part 811 formed on the radially outer side, a finishing part 813 formed on the radially inner side, and a direction-changing part 812 formed between the guide part 811 and the finishing part 813.

As the first mold 810 descends, the open end part 1231 of the side wall 123 may sequentially slide along and be bent by the guide part 811, the direction-changing part 812 and the finishing part 813 of the molding surface. When the open end part 1231 of the side wall 123 is bent by the downward pressing force of the first mold 810, the sealing gasket 140 disposed on the inside may also be simultaneously bent by the pressure of the open end part 1231.

The guide part 811 of the first mold 810 may be formed to incline inward in the radial direction as it extends upward. The guide part 811 may guide the open end part 1231 of the side wall 123 smoothly into the direction-changing part 812 of the molding surface as the first mold 810 moves downward.

For example, the guide part 811 may cause the open end part 1231 of the side wall 123 to gradually bend toward the central axis of the battery can 120. The guide part 811 may apply a preload to the open end part 1231 toward the central axis of the battery can 120. However, it is not limited thereto, and the guide part 811 may be disposed parallel to the central axis of the battery can 120 when viewed from the side.

For example, the surface of the guide part 811 may come into contact with the portion where the outer surface and the upper surface of the open end part 1231 are connected and may slide along this contact area. For example, the tapered section 1231a of the open end part 1231 may contact and slide along the guide part 811.

When the first mold 810 continues to descend, the open end part 1231 of the side wall 123 may slide along the direction-changing part 812 after passing the guide part 811 of the first mold 810, thereby being bent.

For example, the direction-changing part 812 may be formed with a predetermined curvature between the guide part 81 1 and the finishing part 813. The direction-changing part 812 may be formed concavely upward as an upward concave surface.

For example, the boundary between the guide part 811 and the direction-changing part 812 may be described as a starting point of the direction-changing part 812, and the boundary between the direction-changing part 812 and the finishing part 813 may be described as an ending point of the direction-changing part 812. For example, the radial distance (e.g., w2 in FIG. 6) between the starting point and the ending point of the direction-changing part 812 in the vertical cross section may be equal to the radial width (e.g., w1 in FIG. 2) of the crimping part F of the secondary battery 100.

The open end part 1231 of the side wall 123 may slide along the direction-changing part 812 and may gradually be bent inward in the radial direction. Thereafter, as the first mold 810 continues to descend, the open end part 1231 may gradually change its bending direction in an axially downward direction as it passes the uppermost end of the direction-changing part 812. For example, the open end part 1231 of the side wall 123 may be bent toward the electrode assembly 110 by the first mold 810.

The first mold 810 may continue to descend, and the open end part 1231 of the side wall 123 may slide along the finishing part 813, thereby being bent.

The finishing part 813 of the first mold 810 may be formed to incline inward in the radial direction as it extends downward, so that the open end part 1231 of the side wall 123 may gradually bend toward the edge part 132 of the cap plate 130.

However, it is not limited thereto, and the finishing part 813 may be disposed parallel to the central axis of the battery can 120 when viewed from the side, or may be formed to incline radially outward as it extends downward.

Referring to FIG. 7, at the bottom dead center of the first mold 810, the first main body 810a of the first mold 810 may be spaced apart from the cap plate 130 by a predetermined distance. Therefore, during the downward pressing process by the first mold 810, the cap plate 130 may not be subjected to a downward pressing force by the first main body 810a of the first mold 810.

In the present disclosure, the downward pressing force by the first mold 810 may be applied to the side wall 123 of the battery can 120 and the sealing gasket 140. For example, the downward pressing force by the first mold 810 may not be applied to the cap plate 130 seated on the electrode assembly 110.

In the present disclosure, since the downward pressing force by the first mold 810 is not applied to the cap plate 130, damage to the electrode assembly 110 during the crimping process may be prevented.

When the first mold 810 moves to its bottom dead center while applying the pressing force to the battery can 120, the open end part 1231 of the side wall 123 and the sealing gasket 140 may be bent so as to at least partially surround the edge part 132 of the cap plate 130.

The open end part 1231 of the side wall 123 may be bent in a direction toward the electrode assembly 110 through the direction-changing part 812. The open end part 1231 of the side wall 123 may be bent to be adjacent to the body part 131 of the cap plate 130.

At this time, the sealing gasket 140, which is bent together with the open end part 1231 of the side wall 123, may be spaced apart from the inner surface of the edge part 132 by a predetermined distance. The spacing between the sealing gasket 140 and the edge part 132 may be due to the shape of the finishing part 813 of the molding surface of the first mold 810 or may result from a springback phenomenon that occurs during the bending process of the open end part 1231.

In the present disclosure, the downward pressing force by the first mold 810 is applied toward the vertical part 1235 of the side wall 123 and the open end part 1231 of the side wall 123 via the bent part 1232 of the side wall 123, as shown in FIG. 6. That is, in the present disclosure, since the finishing part 813 of the molding surface of the first mold 810 is formed to incline inward in the radial direction as it extends downward, the pressing force by the first mold 810 may not be applied to the edge part 132 of the cap plate 130.

Meanwhile, the backup roller 830 may prevent unnecessary deformation of the vertical part 1235 of the side wall 123 in the radially outward direction by supporting the side wall 123 inward in the radial direction while the side wall 123 is pressed downward by the first mold 810 during the primary crimping process.

For example, the backup roller 830 may support the side wall 123 at a position lower than at least the body part 131 of the cap plate 130 during the primary crimping process. This is to prevent interference with the first main body 810a of the first mold 810.

For example, the backup roller 830 may descend together with the first mold 810 and may support at least a partial section of the side wall 123 of the battery can 120 continuously while the first mold 810 presses the side wall 123 of the battery can 120 downward.

FIGS. 8 and 9 are schematic drawings illustrating the crimping process using the second mold 820 according to an exemplary embodiment of the present disclosure.

Referring to FIGS. 8 and, the secondary battery manufacturing apparatus 800 of the present disclosure may include a second mold 820. In the present disclosure, a secondary crimping process may be performed using the second mold 820.

In an exemplary embodiment, in the secondary crimping process using the second mold 820, the second mold 820 may apply a secondary pressing force in a radially outward direction to the open end part 1231 of the side wall 123. For example, the primary pressing force by the first mold 810 and the secondary pressing force by the second mold 820 may be applied in directions perpendicular to each other.

In an exemplary embodiment, the second mold 820 may include a second main body 820a disposed to rotate about a second rotational axis (e.g., C2 in FIG. 9), parallel to the central axis of the battery can 120, and a support device of the second mold 820 configured to support movement of the second main body 820a in the radial and/or axial directions.

The second main body 820a may be disposed to rotate about the second rotational axis, and may include a pressing surface 821 configured to contact and press the open end part 1231 of the side wall 123.

The second main body 820a of the second mold 820 may rotate about the second rotational axis while the pressing surface 821 is in contact with the open end part 1231 of the side wall 123, thereby pressing the open end part 1231.

The second main body 820a may be arranged to move in the axial direction via the support device of the second mold 820. The second main body 820a may also be arranged to move in the radial direction via the support device of the second mold 820.

When the primary crimping process using the first mold 810 is completed, the second main body 820a of the second mold 820 may be moved into the mold placement space 135 formed between the terminal part 133 and the edge part 132 of the cap plate 130. The second main body 820a may be placed in the mold placement space 135 to apply a secondary pressing force to the open end part 1231 of the side wall 123.

For example, the secondary crimping process may be performed in a state where the sealing gasket is disposed at a predetermined distance from the edge part 132 as a result of the primary crimping process.

For example, in the secondary crimping process of the present disclosure, the open end part 1231 of the side wall 123, which has been bent to be adjacent to the body part 131 of the cap plate 130 during the primary crimping process, may be pressed radially outward and thereby deformed.

In the secondary crimping process of the present disclosure, the open end part 1231 of the side wall 123 may be pressed by the second mold 820, thereby bringing the sealing gasket 140 into close contact with the edge part 132.

Through the secondary crimping process, at least a partial region of the open end part 1231 may be disposed parallel to the edge part 132 of the cap plate 130. For example, at least a partial region of the open end part 1231 may be pressed by the second mold 820 to be curved toward the edge part 132.

In the present disclosure, the crimping part F may be finally formed on the battery can 120 through the secondary crimping process. The crimping part F may be formed in a state where the open end part 1231 of the side wall 123 is spaced apart from the body part 131 of the cap plate 130 by the insulation gap a.

In the secondary crimping process using the second mold 820, only a radial pressing force may be provided to the edge part 132 of the cap plate 130. An axial pressing force may not be applied to the cap plate 130 during the secondary crimping process. Therefore, in the secondary crimping process, damage to the electrode assembly 110 caused by the cap plate 130 may be prevented, while the crimping part F may be formed to ensue mechanical sealing of the battery can 120.

In the present disclosure, the battery can 120 may be sealed without welding, even though the battery can 120 has a structure in which it directly contacts the cap plate 130.

In the manufacturing process of the present disclosure, the secondary battery 100 has a structure in which the open end part 1231 of the side wall 123 is bent together with the sealing gasket 140 to surround around the edge part 132, thereby enabling the sealing performance of the battery can 120 to be ensured without welding, even while the edge part 132 of the cap plate 130 is in contact with the side wall 123. In addition, by compressing the sealing gasket 140 against the body part 131 of the cap plate 130 through the bent crimping part F of the side wall 123, the sealing performance may be further enhanced.

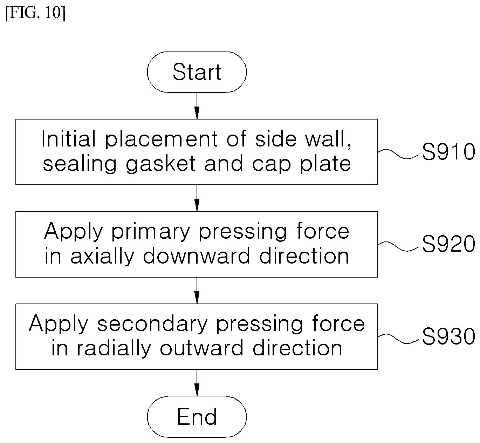

FIG. 10 is a flowchart illustrating the procedure of a method for manufacturing the secondary battery 100 according to an exemplary embodiment of the present disclosure.

Referring to FIG. 10, the method for manufacturing the secondary battery 100 according to an exemplary embodiment of the present disclosure may include an initial placement step (S910) of sequentially placing the sealing gasket 140 and the cap plate 130 on an inner surface of the side wall 123 of the battery can 120.

In the initial placement step, the sealing gasket 140 and the cap plate 130 may be sequentially placed in contact with the inner surface of the side wall 123 of the battery can 120. The sealing gasket 140 and the cap plate 130 are placed at different heights, which is the same as the initial placement state described above, and a repeated description thereof will be omitted.

In an exemplary embodiment, when the initial placement step (S910) is completed, a primary crimping step (S920) may be performed to apply an axially downward primary pressing force to the open end part 1231 of the side wall 123 using the first mold 810. In the primary crimping step (S920), the open end part 1231 of the side wall 123 may be bent in a direction toward the electrode assembly 110 by the direction-changing part 812 formed on the lower surface of the first mold 810. At this time, the first mold 810 may press the open end part 1231 of the side wall 123 in an axially downward direction and may not apply a pressing force to the cap plate 130.

Thereafter, a secondary crimping step (S930) may be performed to apply a secondary pressing force in a radially outward direction to the open end part 1231 that was bent through the primary crimping step (S920). That is, in the secondary crimping step (S930), the open end part 1231 of the side wall 123 is pressed toward the edge part 132 of the cap plate 130 using the second mold 820. In the secondary crimping step (S930), the open end part 1231 may be pressed to surround the edge part 132 while the sealing gasket 140 is interposed therebetween. In the present disclosure, through the secondary crimping step (S930), the open end part 1231 of the side wall 123 and the edge part 132 of the cap plate 130 may be more hermetically coupled with the sealing gasket 140 interposed therebetween.

As described above, according to various embodiments of the present disclosure, by not applying a downward pressing force to the cap plate 130 during the crimping process, the beading part for supporting the cap plate 130 may be omitted.

That is, in the present disclosure, the first mold 810 may apply a downward pressing force to the side wall 123 of the battery can 120, rather than the cap plate 130. In addition, the second mold 820 may apply a pressing force in the radially outward direction, rather than a downward pressing force, to the open end part 1231 of the side wall 123, thereby forming a crimping part F.

Therefore, since the sealing structure proposed in the present disclosure does not require a beading part, space utilization and energy density inside the battery can 120 may be increased.

Therefore, in the present disclosure, by not applying a downward pressing force to the cap plate 130 seated on the upper end of the electrode assembly 110 during the crimping process, damage to the electrode assembly 110 may be prevented.

In the above, although the embodiments of the present disclosure have been described with all components combined in one or operating in combination, the present disclosure is not necessarily limited to such embodiments. Within the scope of the purpose of the present disclosure, all components may be selectively combined in one or more and operate accordingly. Unless otherwise defined, all terms including technical or scientific terms have the same meanings as commonly understood by those skilled in the art to which the present disclosure pertains. Commonly used terms, such as those defined in dictionaries, should be interpreted in accordance with the contextual meaning in the relevant technical field, and unless explicitly defined in the present disclosure, shall not be interpreted in an idealized or unduly formal sense.

The above description is merely illustrative of the technical spirit of the present disclosure, and it will be appreciated by those skilled in the art to which the present disclosure pertains that various modifications and alterations can be made without departing from the essential characteristics of the present disclosure. Therefore, the embodiments disclosed herein are intended to describe, not to limit, the technical spirit of the present disclosure, and the scope of the technical spirit is not limited to these embodiments. The scope of protection of the present disclosure shall be defined by the following claims, and all technical ideas that fall within the equivalent scope shall be construed as being included within the scope of the present disclosure.

## Claims

1. A secondary battery comprising:
a battery can configured to accommodate an electrode assembly;
a cap plate comprising a body part having a shape corresponding to an opening of the battery can and an edge part protruding upward along a perimeter of the body part, the cap plate being coupled to the opening; and
a sealing gasket disposed between the battery can and the edge part,
wherein the battery can comprises a crimping part formed by bending at least a partial section of an upper end portion thereof to surround the edge part.

2. The secondary battery according to claim 1, wherein the crimping part comprises an open end part that surrounds a radially inner side of the edge part and a bent part that surrounds an upper side of the edge part,
wherein the open end part is disposed parallel to the edge part.

3. The secondary battery according to claim 2, wherein the open end part and the body part are spaced apart from each other to define an insulation gap.

4. The secondary battery according to claim 2 or 3, wherein the sealing gasket comprises: an inner part in close contact with a radially inner surface of the edge part; an outer part in close contact with a radially outer surface of the edge part; and a connecting part that connects the inner part and the outer part and is in close contact with an upper surface of the edge part.

5. The secondary battery according to claim 4, wherein the sealing gasket comprises an extension part extending from the inner part and disposed to cover at least a partial section of the insulation gap formed between the open end part and the body part.

6. The secondary battery according to claim 5, wherein the open end part comprises a tapered section formed with a tapered edge on one side,
wherein the extension part is disposed to cover a region of the open end part excluding the tapered section.

7. The secondary battery according to any one of claim 1 to 6, wherein the cap plate is configured such that the body part is seated on an upper end of the electrode assembly.

8. The secondary battery according to any one of claim 1 to 7, wherein the body part is directly electrically connected to an uncoated part of the electrode assembly.

9. The secondary battery according to any one of claim 1 to 8, wherein the battery can comprises a side wall and a lower wall defining a space to accommodate the electrode assembly,
wherein the side wall comprises a vertical part connecting the lower wall and the crimping part, and
wherein an entire section of the vertical part is formed parallel to the axial direction of the battery can.

10. An apparatus for manufacturing a secondary battery, configured to form a crimping part by bending a side wall of a battery can, comprising:
a first mold configured to apply a primary pressing force in an axially downward direction to an open end part of the side wall; and
a second mold configured to apply a secondary pressing force in a radially outward direction to the open end part after it is bent by the first mold.

11. The apparatus for manufacturing a secondary battery according to claim 10, wherein the first mold comprises a first main body configured to rotate, and a molding surface formed concavely upward from a lower surface of the first main body,
wherein the molding surface comprises a direction-changing part configured to guide the open end part to slide and bend downward.

12. The apparatus for manufacturing a secondary battery according to claim 10 or 11, wherein a cap plate is coupled to an opening formed by opening at least one end of the battery can, and the cap plate comprises a body part having a shape corresponding to the open part and an edge part protruding upward along a perimeter of the body part,
wherein the second mold is configured to press the open end part toward the edge part.

13. The apparatus for manufacturing a secondary battery according to claim 12, wherein the second mold presses the open end part such that at least a portion of the open end part is disposed parallel to the edge part.

14. The apparatus for manufacturing a secondary battery according to claim 12, wherein the open end part is bent so as to be spaced apart from the body part by a predetermined distance.

15. A method for manufacturing a secondary battery, comprising:
an initial placement step of sequentially placing a sealing gasket and a cap plate on an inner surface of a side wall of a battery can;
a primary crimping step of applying a primary pressing force in an axially downward direction to an open end part of the side wall using a first mold; and
a secondary crimping step of applying a secondary pressing force in a radially outward direction to the open end part, which has been bent in a direction toward an electrode assembly placed inside the battery can through the primary crimping step, wherein the cap plate comprises a body part having a shape corresponding to the opening of the battery can and an edge part protruding upward along a perimeter of the body part,
wherein, in the secondary crimping step, the open end part is pressed to surround the edge part with the sealing gasket interposed therebetween.
